# EUROPÄISCHE PATENTSCHRIFT

(11) **EP 1 844 889 B1**
(45) Veröffentlichungstag und Bekanntmachung des Hinweises auf die Patenterteilung: **17.07.2019**
(21) Anmeldenummer: 07006852.3
(22) Anmeldetag: 02.04.2007
(51) Int. Cl.: B23K 11/11

(54) **Verfahren und Vorrichtung zum punktförmigen Schweissen an mindestens einem Werkstück positionierter Schweisselektroden mittels mindestens eines Roboters**
Method and device for spot welding on at least one workpiece using at least one robot
Procédé et dispositif destinés au soudage par points sur au moins une électrode de soudure positionnée sur une pièce usinée à l'aide d'au moins un robot

(30) Priorität: 13.04.2006 DE 102006017527
(43) Veröffentlichungstag der Anmeldung: 17.10.2007
(73) Patentinhaber: KUKA Deutschland GmbH, 86165 Augsburg (DE)
(72) Erfinder: Settele, Norbert, 86574 Petersdorf-Wilprechtszell (DE)
(74) Vertreter: Ege Lee & Partner Patentanwälte PartGmbB

(56) Entgegenhaltungen:
- WO-A2-02/36298
- DE-A1-102004 020 438
- JP-A- 11 333 569
- JP-A- 2007 050 450
- US-A- 4 485 683
- US-A1- 2004 134 888

## Beschreibung

Die Erfindung betrifft ein Verfahren gemäß dem Oberbegriff des Anspruchs 1 und eine Vorrichtung gemäß dem Oberbegriff des Anspruchs 13 zum punktförmigen Schweißen an mindestens einem Werkstück, insbesondere mittels mindestens eines Roboters sowie eines Roboters mit einer entsprechenden Vorrichtung.

Aus dem Stand der Technik sind Widerstandsdruckschweißverfahren zum punktförmigen bzw. linsenförmigen Verschweißen von Werkstücken bekannt, beispielsweise von Stahlblechen im Automobilbau in einer Fertigungsanlage mit Industrierobotern. Die Werkstücke werden dabei durch zwei gegenüberliegende Elektroden, beispielsweise in Form einer Schweißzange, an einem Punkt zusammengepresst, wobei sehr hohe Anpresskräfte in einem Bereich von 2 kN erforderliche sind. Durch die Elektroden wird ein Schweißstrom in die Werkstücke geleitet und am Übergang zwischen den Werkstücken, genauer an dem Punkt, an dem dieselben zusammengepresst sind, wird infolge des hohen elektrischen Widerstands ein Aufschmelzen des Grundwerkstoffs bewirkt.

In der DE 103 38 176 A1 ist ein Verfahren zur Regelung der Kraft derartiger Schweißzangen beschrieben, die durch die zwei gegenüberliegenden Elektroden gebildet sind, so dass unabhängig von Lageabweichungen der Elektroden oder innerhalb der Dickentoleranzen der Werkstücke stets dieselbe Elektrodenpresskraft sichergestellt ist. Der Nachteil eines derartigen Verfahrens ist, dass die Elektroden von beiden Seiten der Schweißstelle, d.h. von zwei gegenüberliegenden Oberflächen des Werkstücks, positioniert werden müssen, wodurch die Mobilität der Schweißzange bzw. der Werkstücke bei der Umpositionierung derselben zwischen zwei aufeinanderfolgenden Schweißvorgängen eingeschränkt ist. Außerdem wäre ein simultanes Verschweißen mehrerer Schweißstellen vorteilhaft, wobei jedoch durch die Verwendung mehrerer Schweißzangen die Bewegungsfreiheit der Schweißvorrichtung zwischen zwei Schweißvorgängen weiter eingeschränkt ist.

Die JP63-005885 zeigt ein Punktschweißverfahren, bei dem die Schweißelektroden durch eine punktförmige Schweißspitze und eine flächige Rückhalteelektrode gebildet sind, die jeweils entlang den entgegengesetzten Oberflächenseiten des Werkstücks über einen zugeordneten Roboterarm beweglich anortbar sind. Dabei wird die zum Schweißen erforderliche Anpresskraft der Elektroden nur unpräzise durch die Kraftwirkung des Roboterarms über einen Federvorspann im Roboterarm geregelt. Außerdem erlaubt ein derartiges Verfahren nur ein Verschweißen an einem Schweißpunkt während eines jeweiligen Schweißvorgangs, was einen hohen Zeitaufwand bei Werkstücken mit einer Vielzahl zu bearbeitender Schweißstellen mit sich bringt.

In einem anderen bekannten Widerstandsdruckschweißverfahren sind die Elektroden auf derselben Werkstückoberfläche angeordnet und die zum Schweißen erforderliche Anpresskraft ist üblicherweise durch eine Federvorspannung realisiert, welche durch eine räumlich feste Gegenhaltung auf der gegenüberliegenden Seite des Werkstücks kompensiert wird, wie einen stabpositionierten Roboterarm. Hierbei ist nachteilig, dass bei Lageveränderung der Elektroden bzw. bei Unebenheiten, Material- und Dickenunterschiede der Werkstücke eine Schwankung der Elektrodenanpresskraft durch die Federspannung erfolgt, insbesondere wenn die Wirkungsrichtung der Kraft, deren Betrag idealerweise durch das Hookesche Gesetz gegeben ist, verändert wird. Durch die Abnutzung der Elektroden während des Schweißens erfolgt eine zusätzliche Verfälschung der vorgesehenen Anpresskraft nach längerer Beanspruchungszeit. Dies führt zur Unvorhersehbarkeit der Lage und Güte der Schweißstelle, sowie zu zusätzlichen Fehlerquellen und Ausschuss während des Fertigungsprozesses. JP 11333569 A offenbart ein Verfahren gemäß dem Oberbegriff des Anspruchs 1 und eine Vorrichtung gemäß dem Oberbegriff des Anspruchs 13.

Der Erfindung liegt die Aufgabe zugrunde, ein Verfahren und eine Vorrichtung anzugeben, durch deren Einsatz sich die vorstehend aufgeführten Nachteile in Verbindung mit einem punktförmigen Verschweißen von Werkstücken vermeiden lassen.

Die Aufgabe wird gelöst durch ein Verfahren gemäß Anspruch 1 zum punktförmigen Schweißen an einem Werkstück mit wenigstens zwei Elektroden, die jeweils paarweise nebeneinander entlang derselben Oberflächenseite des Werkstücks angeordnet und gegen die Oberfläche des Werkstücks kraftbeaufschlagt werden.

Weiter wird die Aufgabe gelöst durch eine Vorrichtung gemäß Anspruch 13 zum punktförmigen Schweißen an einem Werkstück mit wenigstens zwei gegen die Oberfläche des Werkstücks kraftbeaufschlagten Elektroden, die jeweils paarweise nebeneinander entlang derselben Oberflächenseite des Werkstücks angeordnet sind, mit einer Gegenhaltung zum Halten des Werkstücks gegen die Anpresskraft der Elektroden an der gegenüberliegenden Oberflächenseite und mit wenigstens einem Motor zur Regelung der Anpresskraft wenigstens einer Elektrode vor und/oder während des Schweißvorgangs.

Die Haltung des Werkstücks erfolgt mittels einer vorzugsweise stationären Gegenhaltung.

Durch die Erfindung wird ermöglicht, willkürlichen Änderungsfaktoren der Anpresskraft der Elektroden entgegenzuwirken und eine gleichbleibend hohe Schweißqualität selbst nach langer Beanspruchungszeit der Elektroden sicherzustellen. Gleichzeitig kann die hohe Schweißqualität selbst bei schwer zu verschweißenden Bauteilen, die insbesondere in einem Schweißverfahren mit gegenüberliegend angeordneten Elektroden nicht zugänglich sind, da sie beispielsweise eine starke Krümmung oder Dickenvariation der Oberflächen aufweisen, aufrecht erhalten werden.

In bevorzugter Ausgestaltung des erfindungsgemäßen Verfahrens ist vorgesehen, dass die Anpresskraft aller Elektroden geregelt wird, wodurch die genannten Vorteile weitestgehend ausgeschöpft werden können. In einer anderen Weiterbildung ist vorgesehen, dass die Anpresskraft der jeweiligen Elektrode(n) derart geregelt wird, dass sich für zwei oder mehrere Elektroden, in höchst bevorzugter Ausbildung für alle Elektroden, im Wesentlichen dieselbe Anpresskraft an das Werkstück ergibt. Erfindungsgemäß wird somit ein simultanes Verschweißen an beliebigen Schweißpunkten in nahezu beliebiger Anzahl ermöglicht und es wird neben erhöhter Fertigungseffizienz eine hohe Qualität der Verschweißungen aufrechterhalten, die durch den vorgegebenen Sollwert der Anpresskraft der Elektroden gesichert ist.

Eine höchst bevorzugte Ausbildung der Erfindung sieht hierzu vor, dass die Anpresskraft der jeweiligen Elektrode(n) jeweils einzeln geregelt wird. Die Vorrichtung sieht hierzu bevorzugt eine eigene Kraftregeleinrichtung für jede Elektrode vor. Die Anpresskraft kann so individuell für jede Elektrode geregelt werden. Die Regelung der Anpresskraft kann hierbei mittels jeweils eines Motors erfolgen.

Eine andere Weiterbildung des Verfahrens sieht vor, dass die Anpresskraft wenigstens einer Elektrode vor und/oder während des Schweißvorgangs gemessen wird. Hierzu weist eine gattungsgemäße Vorrichtung wenigstens einen Sensor zur Messung der Anpresskraft wenigstens einer Elektrode vor und/oder während des Schweißvorgangs auf. Dabei kann zur Durchführung des erfindungsgemäßen Verfahrens vorgesehen sein, dass die Regelung der Anpresskraft hinsichtlich eines Vergleichs der gemessenen Anpresskraft mit dem vorgegebenen Sollwert erfolgt. Der Sollwert der Anpresskraft liegt bevorzugt in einem Bereich zwischen 2 kN und 5 kN. In alternativer Ausgestaltung erfolgt die Regelung der Anpresskraft der jeweiligen Elektrode(n) in Bezug auf eine gemessene Anpresskraft einer oder mehrerer anderer Elektrode(n). Eine andere Ausgestaltung sieht vor, dass die Regelung der Anpresskraft der jeweiligen Elektrode(n) in Bezug auf eine in einem vorangehenden Schweißvorgang gemessene Anpresskraft erfolgt.

Gemäß einer anderen Weiterbildung des Verfahrens wird zwischen zwei aufeinanderfolgenden Schweißvorgängen die Position einer oder mehrerer Elektrode(n) entlang der Oberfläche des Werkstücks verändert, wobei eine oder mehrere Elektroden und/oder das Werkstück innerhalb der drei Raumkoordinaten umpositioniert werden kann. In äußerst bevorzugter Ausführung wird dabei die Position der jeweiligen Elektrode unabhängig von der Position der anderen Elektrode(n) verändert, wodurch ermöglicht wird, dass in unterschiedlichen simultanen Schweißvorgängen die Elektroden an strategisch günstigen Positionen entlang der Oberfläche des Werkstückes positioniert werden können, um beispielsweise Nebenschlussströme zu verringern, welche am Schweißpunkt vorbeifließen und somit ein effizienteres Schweißen ermöglichen. Eine erfindungsgemäße Vorrichtung weist hierzu wenigstens einen Motor zur Positionierung wenigstens einer Elektrode entlang der Oberfläche des Werkstücks auf.

In bevorzugter Ausführung wird das erfindungsgemäße Verfahren und die erfindungsgemäße Vorrichtung auf Werkstücke angewendet, die eine gekrümmte und/oder inhomogene Oberfläche aufweisen und/oder an der Oberfläche aus unterschiedlichen Werkstoffen gebildet sind, wobei die Vorteile der Erfindung im Vergleich zu herkömmlichen Schweißverfahren besonders zur Geltung kommen.

Nachfolgend ist die Erfindung anhand bevorzugter Ausführungsformen unter Bezugnahme auf die Zeichnungen näher erläutert, anhand welcher sich weitere Eigenschaften und Vorteile der Erfindung ergeben. Es zeigen:
- Fig. 1: eine schematische Darstellung einer erfindungsgemäßen Schweißvorrichtung bei der Durchführung eines Schweißvorgangs;
- Fig. 2: ein Ablaufdiagramm eines erfindungsgemäßen Verfahrens.

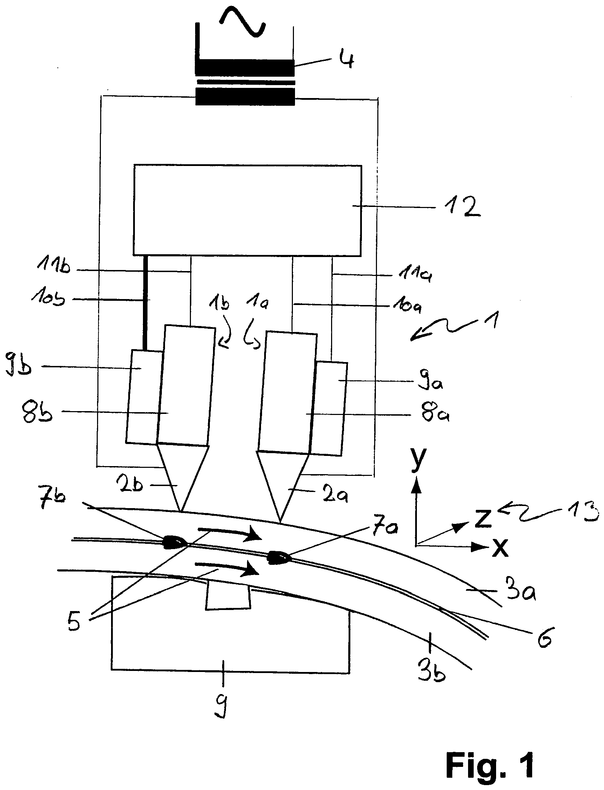

Die Fig. 1 zeigt eine Vorrichtung zum Doppelpunktschweißen 1 mit zwei Elektroden 2a und 2b, die nebeneinander entlang der Oberfläche eines gekrümmten Metallblechs 3a angeordnet sind, das mit einem zweiten Metallblech 3b verschweißt werden soll. Durch die Elektroden 2a und 2b, die mit einer Spule 4 zur Spannungsversorgung verbunden sind, wird ein Schweißstrom in das Blech 3a eingeleitet, dessen Stromrichtung durch Pfeile 5 gekennzeichnet ist. Am Übergang 6 zwischen den zwei Metallblechen 3a und 3b, d.h. an der Stelle des größten elektrischen Widerstands, erfolgt unterhalb der Position der Elektroden 2a und 2b ein Aufschmelzen der Werkstoffe, wodurch die zwei Schweißpunkte 7a und 7b gebildet werden.

Erfindungsgemäß weisen die Elektroden 2a und 2b zur Erzeugung der während des Schweißverfahrens benötigten Anpresskräfte, durch die die Metallbleche 3a und 3b an den Schweißpunkten 7a und 7b zusammengepresst sind, jeweils einen Motor 8a, 8b auf. Zur räumlichen festen Gegenhaltung der Metallbleche 3a, 3b gegen die Anpresskräfte der Elektroden 2a, 2b ist ein Unterkupfer 9 vorgesehen. In alternativer Ausgestaltung ist das Unterkupfer 9 leitfähig ausgebildet und über jeweils eine Spannungsquelle mit einer der Elektroden 2a und 2b verbunden, so dass die Stromleitung durch die Bleche 3a, 3b zwischen jeweils einer Elektrode 2a, 2b und dem Unterkupfer 9 erfolgt, wobei die Spule 4 nicht zum Einsatz kommt.

Zur Erfassung der momentanen Anpresskraft einer jeweiligen Elektrode 2a, 2b weist die erfindungsgemäße Vorrichtung 1 für jede der Elektroden 2a, 2b einen Kraftsensor 9a, 9b auf. Sowohl die Kraftsensoren 9a, 9b als auch die Motormittel 8a, 8b sind über jeweils eine Datenverbindung 10a, 10b und 11a, 11b mit einer Steuereinheit 12 verbunden. Die Steuereinheit 12 ist durch eine implementierte Steuerungssoftware dazu ausgelegt, die Messwerte der Kraftsensoren 9a, 9b zu erfassen und mit einem Sollwert zu vergleichen. Im Falle einer Abweichung eines/der Ist-Werte vom Soll-Wert ist sie dazu ausgebildet, ein entsprechendes Regelungssignal an die Motoren 8a, 8b zu übertragen.

Die zwei aus jeweils einer Elektrode 2a oder 2b, einem Motormittel 8a oder 8b und einem Kraftsensor 9a oder 9b gebildeten Schweißeinheiten 1a, 1b sind unabhängig voneinander positionierbar angeordnet. In bevorzugter Ausführung sind sie in einem gemeinsamen Gehäuse (nicht gezeigt) derart angeordnet, dass nur die Elektroden 2a, 2b aus dem Gehäuse hervorragen. Die Motoren 9a, 9b sind dazu ausgebildet, die Schweißeinheiten 1a, 1b zwischen zwei Schweißvorgängen hinsichtlich der drei räumlichen Freiheitsgrade 13 oberhalb eines neuen Schweißpunkts 7a, 7b auf der Oberfläche des Metallblechs 3a zu positionieren.

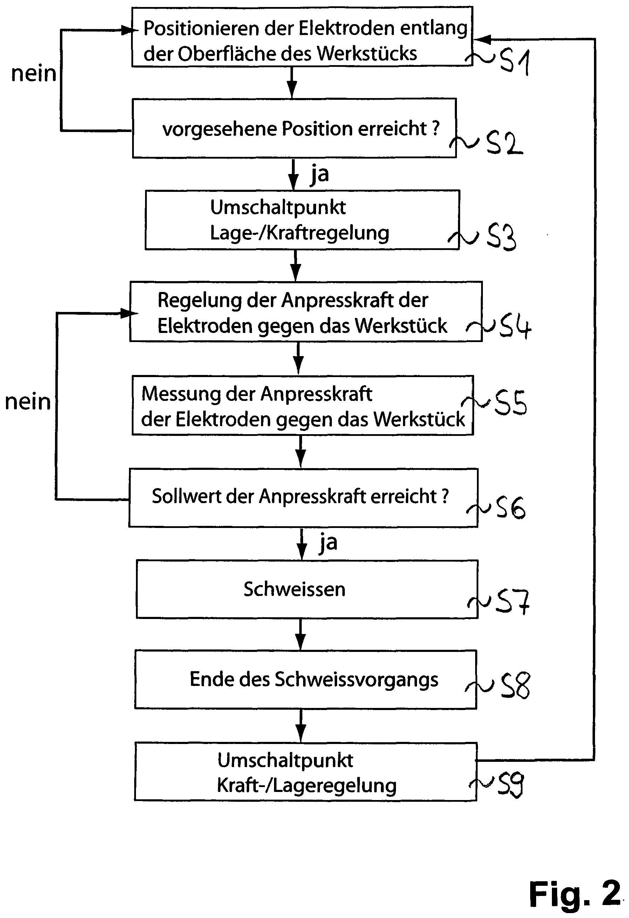

Die Fig. 2 zeigt ein Ablaufdiagramm eines erfindungsgemäßen Verfahrens zur Kraftregelung wenigstens zweier nebeneinander entlang der Oberfläche eines Werkstücks angeordneter Elektroden einer Doppelpunktschweißanlage, wie sie beispielhaft in Fig. 1 dargestellt ist. Das Verfahren beginnt in Schritt S1 damit, dass die Elektroden entlang der Oberfläche des Werkstücks an die zum Schweißen vorgesehenen Positionen bewegt werden. Nach einer Abfrage in Schritt S2, ob die jeweils vorgesehene Lage erreicht ist, erfolgt ein Umschalten von der Lageregelung in die Kraftregelung (Schritt S3). In einem Verfahrensschritt S4 wird dann die Anpresskraft der Elektroden gegen das Werkstück geregelt. Nach einer anschließenden oder parallel dazu ausgeführten Messung der Anpresskraft (Schritt S5) erfolgt ein Vergleichen der Messwerte mit einem Sollwert (Schritt S6). Bei fehlender Übereinstimmung mindestens eines Messwerts mit dem Sollwert wird die Regelung der Anpresskraft der betreffenden Elektrode(n) in Schritt S4 fortgesetzt. Bei Erreichen des Sollwerts der Anpresskraft aller Elektroden wird der Schweißvorgang eingeleitet (Schritt S7). Alternativ können die Verfahrensschritte S4 bis S6 zur Kraftregelung auch während des Schweißens durchgeführt werden, um ein Überprüfen einer homogenen Anpresskraft auch während des Schweißvorgangs sicherzustellen. Nach Beendigung des Schweißvorgangs (Schritt S8) erfolgt eine Umschaltung von der Kraftregelung in die Lageregelung der Elektroden, worauf diese in eine neue Schweißposition am gleichen oder einem anderen Werkstück geführt werden (Schritt S1).

## Patentansprüche

1. Verfahren zum punktförmigen Schweißen an mindestens einem Werkstück, insbesondere mittels mindestens eines Roboters, mit wenigstens zwei simultan schweißenden Elektroden, die jeweils paarweise nebeneinander entlang derselben Oberflächenseite des Werkstücks angeordnet und gegen die Oberfläche des Werkstücks kraftbeaufschlagt werden, wobei das Werkstück gegen die Anpresskraft der Elektroden an der gegenüberliegenden Oberflächenseite mittels einer räumlich festen Gegenhaltung gehalten wird, wobei das Werkstück zwei Metallbleche (3a, 3b) umfasst, **dadurch gekennzeichnet, dass** als räumlich feste Gegenhaltung der Metallbleche (3a, 3b) gegen die Anpresskraft der einzelnen Elektroden (2a, 2b) ein Unterkupfer (9) vorgesehen ist und die Anpresskraft der einzelnen Elektroden (2a, 2b) vor und/oder während des Schweißvorgangs hinsichtlich eines vorgegebenen Sollwerts jeweils einzeln, insbesondere mittels jeweils eines Motors geregelt wird.

2. Verfahren nach Anspruch 1, **dadurch gekennzeichnet, dass** die Anpresskraft aller Elektroden geregelt wird.

3. Verfahren nach Anspruch 1 oder 2, **dadurch gekennzeichnet, dass** die Anpresskraft der jeweiligen Elektrode(n) derart geregelt wird, dass sich für zwei oder mehrere Elektroden im Wesentlichen dieselbe Anpresskraft an das Werkstück ergibt.

4. Verfahren nach einem der Ansprüche 1 bis 3, **dadurch gekennzeichnet, dass** die Anpresskraft der jeweiligen Elektrode(n) derart geregelt wird, dass sich für alle Elektroden im Wesentlichen dieselbe Anpresskraft an das Werkstück ergibt.

5. Verfahren nach einem der Ansprüche 1 bis 4, **dadurch gekennzeichnet, dass** die Anpresskraft wenigstens einer Elektrode vor und/oder während des Schweißvorgangs gemessen wird.

6. Verfahren nach Anspruch 5, **dadurch gekennzeichnet, dass** die Regelung der Anpresskraft hinsichtlich eines Vergleichs der gemessenen Anpresskraft mit dem vorgegebenen Sollwert erfolgt.

7. Verfahren nach Anspruch 6, **dadurch gekennzeichnet, dass** der Sollwert der Anpresskraft zwischen 2kN und 5kN liegt.

8. Verfahren nach Anspruch 7, **dadurch gekennzeichnet, dass** die Regelung der Anpresskraft der jeweiligen Elektrode(n) in Bezug auf eine gemessene Anpresskraft einer oder mehrerer anderer Elektrode(n) erfolgt.

9. Verfahren nach Anspruch 8, **dadurch gekennzeichnet, dass** die Regelung der Anpresskraft der jeweiligen Elektrode(n) in Bezug auf eine in einem vorangehenden Schweißvorgang gemessene Anpresskraft erfolgt.

10. Verfahren nach einem der Ansprüche 1 bis 9, **dadurch gekennzeichnet, dass** das Werkstück eine gekrümmte und/oder inhomogene Oberfläche aufweist und/oder an der Oberfläche aus unterschiedlichen Werkstoffen gebildet ist.

11. Verfahren nach einem der Ansprüche 1 bis 10, **dadurch gekennzeichnet, dass** zwischen zwei aufeinander folgenden Schweißvorgängen die Position einer oder mehrerer Elektrode(n) entlang der Oberfläche des Werkstücks verändert wird.

12. Verfahren nach Anspruch 11, **dadurch gekennzeichnet, dass** die Position der jeweiligen Elektrode unabhängig von der Position der anderen Elektrode(n) verändert wird.

13. Vorrichtung zum punktförmigen Schweißen an mindestens einem Werkstück (3a), insbesondere mittels mindestens eines Roboters, mit wenigstens zwei gegen die Oberfläche des Werkstücks (3a) kraftbeaufschlagten simultan schweißenden Elektroden (2a, 2b), die jeweils paarweise nebeneinander entlang derselben Oberflächenseite des Werkstücks (3a) angeordnet sind, mit einer räumlich festen Gegenhaltung (9) zum Halten des Werkstücks gegen die Anpresskraft der Elektroden an der gegenüberliegenden Oberflächenseite und mit wenigstens einem Motor (8a, 8b) zur Regelung der Anpresskraft wenigstens einer Elektrode (2a, 2b) vor und/oder während des Schweißvorgangs, **gekennzeichnet durch** ein Unterkupfer (9) als räumlich feste Gegenhaltung zweier das Werkstück bildenden Metallbleche (3a, 3b) gegen die Anpresskraft der einzelnen Elektroden (2a, 2b) und jeweils eine eigene, jeweils einem Motor (8a, 8b) zugeordnete Kraftregeleinrichtung für jede Elektrode.

14. Vorrichtung nach Anspruch 13, **gekennzeichnet durch** wenigstens einen Sensor (9a, 9b) zur Messung der Anpresskraft wenigstens einer Elektrode (2a, 2b) vor und/oder während des Schweißvorgangs.

15. Vorrichtung nach Anspruch 13 oder 14, **gekennzeichnet durch** wenigstens einen Motor (8a, 8b) zur Positionierung wenigstens einer Elektrode (2a, 2b) entlang der Oberfläche des Werkstücks (3a).

16. Vorrichtung nach einem der Ansprüche 13 bis 15, **dadurch gekennzeichnet, dass** das Werkstück (3a) eine gekrümmte und/oder inhomogene Oberfläche aufweist und/oder an der Oberfläche aus unterschiedlichen Werkstoffen gebildet ist.

17. Roboter zum punktförmigen Schweißen an mindestens einem Werkstück, **gekennzeichnet durch** eine Vorrichtung nach einem der Ansprüche 13 bis 16.

## Claims

1. Method for spot welding on at least one workpiece, in particular by means of at least one robot, with at least two simultaneously welding electrodes, which are arranged respectively in pairs next to one another along the same surface side of the workpiece and are forced against the surface of the workpiece, wherein the workpiece is held against the pressing force of the electrodes on the opposite surface side by means of a spatially fixed counter holder, wherein the workpiece comprises two metal sheets (3a, 3b), **characterised in that** a copper base (9) is provided as a spatially fixed counter holder of the metal sheets (3a, 3b) against the pressing force of the individual electrodes (2a, 2b) and the pressing force of the individual electrodes (2a, 2b) is controlled respectively before and/or during the welding process with respect to a given reference value individually, in particular each by means of a motor.

2. Method according to claim 1, **characterised in that** the pressing force of all of the electrodes is controlled.

3. Method according to claim 1 or 2, **characterised in that** the pressing force of the respective electrode(s) is controlled such that for two or more electrodes essentially the same pressing force is applied to the workpiece.

4. Method according to any of claims 1 to 3, **characterised in that** the pressing force of the respective electrode(s) is controlled such that for all of the electrodes essentially the same pressing force is applied to the workpiece.

5. Method according to any of claims 1 to 4, **characterised in that** the pressing force of at least one electrode is measured before and/or during the welding process.

6. Method according to claim 5, **characterised in that** the pressing force is controlled with regard to a comparison of the measured pressing force with the given reference value.

7. Method according to claim 6, **characterised in that** the reference value of the pressing force is between 2 kN and 5 kN.

8. Method according to claim 7, **characterised in that** the control of the pressing force of the respective electrode(s) is performed in relation to a measured pressing force of one or more of the other electrode(s).

9. Method according to claim 8, **characterised in that** the control of the pressing force of the respective electrode(s) is performed in relation to a pressing force measured in a preceding welding process.

10. Method according to any of claims 1 to 9, **characterised in that** the workpiece has a curved and/or inhomogeneous surface and/or is formed on the surface from different materials.

11. Method according to any of claims 1 to 10, **characterised in that** between two consecutive welding processes the position of one or more of the electrode(s) is changed along the surface of the workpiece.

12. Method according to claim 11, **characterised in that** the position of the respective electrode is changed independently of the position of the other electrode(s).

13. Device for spot welding on at least one workpiece (3a), in particular by means of at least one robot, with at least two simultaneously welding electrodes (2a, 2b) forced against the surface of the workpiece (3a), which are arranged respectively in pairs next to one another along the same surface side of the workpiece (3a), with a spatially fixed counter holder (9) for holding the workpiece against the pressing force of the electrodes on the opposite surface side and with at least one motor (8a, 8b) for controlling the pressing force of at least one electrode (2a, 2b) before and/or during the welding process, **characterised by** a copper base (9) as a spatially fixed counter holder of two metal sheets (3a, 3b) forming the workpiece against the pressing force of the individual electrodes (2a, 2b) and respectively a separate force control device for each electrode each assigned to a motor (8a, 8b).

14. Device according to claim 13, **characterised by** at least one sensor (9a, 9b) for measuring the pressing force of at least one electrode (2a, 2b) before and/or during the welding process.

15. Device according to claim 13 or 14, **characterised by** at least one motor (8a, 8b) for positioning at least one electrode (2a, 2b) along the surface of the workpiece (3a).

16. Device according to any of claims 13 to 15, **characterised in that** the workpiece (3a) has a curved and/or inhomogeneous surface and/or is formed on the surface from different materials.

17. Robot for spot welding on at least one workpiece, **characterised by** a device according to any of claims 13 to 16.

## Revendications

1. Procédé pour le soudage par points sur au moins une pièce à usiner, en particulier au moyen d'au moins un robot, comportant au moins deux électrodes soudant simultanément qui sont agencées respectivement par paires l'une à côté de l'autre le long du même côté de la surface de la pièce à usiner et sollicitées par une force contre la surface de la pièce à usiner, la pièce à usiner étant maintenue contre la force de pressage des électrodes sur le côté opposé de la surface au moyen d'un contre-support spatialement fixe, la pièce à usiner comprenant deux tôles (3a, 3b), **caractérisé en ce qu'**en tant que contre-appui spatialement fixe des tôles (3a, 3b) contre la force de pressage des électrodes individuelles (2a, 2b), il est prévu un sous-cuivrage (9), et la force de pressage des électrodes (2a, 2b) individuelles est régulée individuellement avant et/ou pendant le processus de soudage, en ce qui concerne une valeur de consigne prédéterminée, en particulier chaque au moyen d'un moteur respectif.

2. Procédé selon la revendication 1, **caractérisé en ce que** la force de pressage de toutes les électrodes est régulée.

3. Procédé selon la revendication 1 ou 2, **caractérisé en ce que** la force de pressage de la ou des électrodes respectives est régulée de telle sorte que, pour deux électrodes ou plus, il en résulte sensiblement la même force de pressage sur la pièce à usiner.

4. Procédé selon l'une des revendications 1 à 3, **caractérisé en ce que** la force de pressage de la ou des électrodes respectives est régulée de telle sorte qu'il en résulte pour toutes les électrodes sensiblement la même force de pressage sur la pièce à usiner.

5. Procédé selon l'une des revendications 1 à 4, **caractérisé en ce que** la force de pressage d'au moins une électrode est mesurée avant et/ou pendant l'opération de soudage.

6. Procédé selon la revendication 5, **caractérisé en ce que** la régulation de la force de pressage a lieu par rapport à une comparaison de la force de pressage mesurée avec la valeur de consigne prédéterminée.

7. Procédé selon la revendication 6, **caractérisé en ce que** la valeur de consigne de la force de pressage est comprise entre 2 kN et 5 kN.

8. Procédé selon la revendication 7, **caractérisé en ce que** la régulation de la force de pressage de la ou des électrodes respectives a lieu par rapport à une force de pressage mesurée d'une ou de plusieurs autres électrodes.

9. Procédé selon la revendication 8, **caractérisé en ce que** la régulation de force de pressage de la ou des électrodes respectives a lieu par rapport à une force de pressage mesurée dans une opération de soudage précédente.

10. Procédé selon l'une des revendications 1 à 9, **caractérisé en ce que** la pièce à usiner présente une surface courbe et/ou non homogène et/ou est formée sur la surface à partir de différents matériaux.

11. Procédé selon l'une des revendications 1 à10, **caractérisé en ce que** la position d'une ou de plusieurs électrodes le long de la surface de la pièce à usiner est modifiée entre deux opérations de soudage successives.

12. Procédé selon la revendication 11, **caractérisé en ce que** la position de la respective est modifiée indépendamment de la position de l'autre ou des autres électrodes.

13. Dispositif de soudage par points sur au moins une pièce à usiner (3a), en particulier au moyen d'au moins un robot, comprenant au moins deux électrodes (2a, 2b) soudant simultanément qui sont sollicitées par une force contre la surface de la pièce à usiner (3a) et qui sont respectivement agencées par paires l'une à côté de l'autre sur le même côté de surface de la pièce à usiner (3a), comportant un contre-appui (9) pour maintenir la pièce à usiner contre la force de pressage des électrodes sur le côté opposé de la surface, et comportant au moins un moteur (8a, 8b) pour réguler la force de pressage d'au moins une électrode (2a, 2b) avant et/ou pendant l'opération de soudage, **caractérisé par** un sous-cuivrage (9) en tant que contre-appui spatialement fixe des tôles (3a, 3b) contre la force de pressage des électrodes individuelles (2a, 2b) et par un dispositif de régulation de force propre pour chaque électrode, qui est associé à chaque un moteur (8a, 8b) respectif.

14. Dispositif selon la revendication 13, **caractérisé par** au moins un capteur (9a, 9b) pour mesurer la force de pressage d'au moins une électrode (2a, 2b) avant et/ou pendant l'opération de soudage.

15. Dispositif selon la revendication 13 ou 14, **caractérisé par** au moins un moteur (8a, 8b) pour positionner au moins une électrode (2a, 2b) le long de la surface de la pièce à usiner (3a).

16. Dispositif selon l'une des revendications 13 à 15, **caractérisé en ce que** la pièce à usiner (3a) présente une surface courbée et/ou non homogène et/ou est formée sur la surface à partir de différents matériaux.

17. Robot pour le soudage par points sur au moins une pièce à usiner, **caractérisé par** un dispositif selon l'une des revendications 13 à 16.
